# EUROPEAN PATENT APPLICATION

(11) **EP 4 679 563 A1**
(43) Date of publication of application: **14.01.2026**
(21) Application number: 25183596.3
(22) Date of filing: 18.06.2025
(51) Int. Cl.: H01M 10/54, C01B 32/72, H01M 4/133, H01M 4/62, H01M 10/052

(54) **METHOD OF PRODUCING RECYCLED MATERIAL**

(30) Priority: 09.07.2024 JP 2024110100
(71) Applicant: TOYOTA JIDOSHA KABUSHIKI KAISHA, Toyota-shi, Aichi-ken 471-8571 (JP)
(72) Inventor: KATO, Kazuhito, Toyota-shi, 471-8571 (JP); ABE, Takeshi, Toyota-shi, 471-8571 (JP); MIKI, Nariaki, Toyota-shi, 471-8571 (JP); MORIOKA, Satoshi, Toyota-shi, 471-8571 (JP); FUJISHIMA, Seigo, Toyota-shi, 471-8571 (JP); YOKOYAMA, Tomohiro, Toyota-shi, 471-8571 (JP); KATO, Masashi, Toyota-shi, 471-8571 (JP)
(74) Representative: Kuhnen & Wacker Patent- und Rechtsanwaltsbüro PartG mbB

(57) **Abstract**

The present disclosure relates to a method of producing a recycled material. The method of producing a recycled material includes the following (a) and (b). (a) Preparing a battery material. (b) Generating carbon disulfide by causing carbon that is included in the battery material and sulfur to react with each other.

## Description

### CROSS-REFERENCE TO RELATED APPLICATION

This application claims priority to Japanese Patent Application No. 2024-110100 filed on July 9, 2024. The disclosure of the above-identified application, including the specification, drawings, and claims, is incorporated by reference herein in its entirety.

### BACKGROUND OF THE INVENTION

### 1. Field of the Invention

The present disclosure relates to a method of producing a recycled material.

### 2. Description of Related Art

Japanese Unexamined Patent Application Publication No. 2022-147471 (JP 2022-147471 A) discloses a method of recovering metal from an electrode plate.

### SUMMARY OF THE INVENTION

It is desired to recover various materials from unnecessary batteries and the like to recycle the materials. Hitherto, various recovering methods and reuse methods for metal have been proposed. However, there is still room for consideration of recovering methods and reuse methods for carbon.

The present disclosure has an object to provide a method of effectively using carbon included in a battery material.
1. A method of producing a recycled material includes Items (a) and (b) described below.
   (a) Preparing a battery material.
   (b) Generating carbon disulfide by causing carbon included in the battery material and sulfur to react with each other.
   In the present disclosure, carbon may be easily recovered from the battery material, and further carbon may be effectively used. That is, in the present disclosure, carbon disulfide (CS₂) is produced from the battery material including carbon. CS₂ is a recycled material. CS₂ may be a raw material of various chemical products. For example, with the use of CS₂ as a raw material, viscose rayon, cellophane, carbon tetrachloride, and the like may be produced.
2. The method of producing a recycled material according to Item "1" described above may include the following configuration, for example. The battery material may include at least one type selected from the group consisting of a positive electrode plate, a negative electrode plate, a bipolar electrode plate, a positive electrode mixed material, a negative electrode mixed material, a black mass, and a sludge.
   The battery material is freely selectable as long as the battery material includes carbon. As a component including carbon, for example, an electrically conductive material, a binder, a carbon-based negative electrode active material, and the like included in the electrode mixed material are conceivable.
3. The method of producing a recycled material according to Item "1" or "2" described above may include the following configuration, for example. Item (a) described above may include Item (a1) described below.

### (a1) Forming a granular material by crushing the battery material.

With the battery material being crushed, for example, an improvement in contact efficiency between carbon and sulfur can be expected.

4. The method of producing a recycled material according to any one of Items "1" to "3" described above may include the following configuration, for example. Item (a) described above may include Item (a2) described below.

### (a2) Carbonizing an organic matter included in the battery material by heating the battery material.

With the organic matter (for example, the binder or the like) being carbonized in advance, an improvement in yield of CS₂ can be expected.

5. The method of producing a recycled material according to any one of Items "1" to "4" described above may include the following configuration, for example. Item (b) described above may include bringing sulfur vapor into contact with the battery material.

With the use of the sulfur vapor, for example, an improvement in contact efficiency between carbon and sulfur can be expected.

Hereinafter, description is given of an embodiment of the present disclosure (which may be hereinafter simply referred to as "this embodiment"). It is to be noted that this embodiment does not limit the technical scope of the present disclosure. This embodiment is illustrative in any respect. This embodiment is non-restrictive. The technical scope of the present disclosure encompasses any modifications within the meaning and the scope equivalent to the terms of the claims. For example, from the beginning, it is planned to extract appropriate configurations from this embodiment and combine them as appropriate.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic flowchart illustrating a method of producing a recycled material in this embodiment;
FIG. 2 is a schematic sectional view illustrating an example of a positive electrode plate in this embodiment;
FIG. 3 is a schematic sectional view illustrating an example of a negative electrode plate in this embodiment;
FIG. 4 is a schematic sectional view illustrating an example of a bipolar electrode plate in this embodiment; and
FIG. 5 is a concept view illustrating an example of a production apparatus in this embodiment.

### DETAILED DESCRIPTION OF EMBODIMENTS

### Terms and Phrases

Expressions such as "comprise", "include", and "have", and other similar expressions are open-ended expressions. In configurations expressed with open-ended expressions, an additional component may be or may not be further included in addition to an essential component.

Regarding a plurality of steps, operations, processes, and the like included in various methods, the order for implementing those is not limited to the described order, unless otherwise specified. For example, a plurality of steps may proceed simultaneously. For example, a plurality of steps may be implemented in reverse order.

The "battery material" represents any material, member, or component included in a battery. The battery material may be a single material or a mixture (for example, a mixed material or the like). The battery material may be, for example, a composite material (for example, an electrode plate or the like), a compact, or the like.

The "black mass" represents a concentrate obtained through heat treatment (roasting) of the battery, crushing of the roasted material, sorting of the crushed material, and the like. The black mass includes, for example, metal such as nickel, cobalt, and manganese. Metal such as nickel may be a component derived from, for example, a positive electrode active material.

The "sludge" represents a residue obtained after extracting valuable metal such as nickel, cobalt, and manganese from the black mass. Hitherto, the sludge has been discarded. In this embodiment, the sludge may be effectively used as a recovery target of carbon.

### Method of Producing Recycled Material

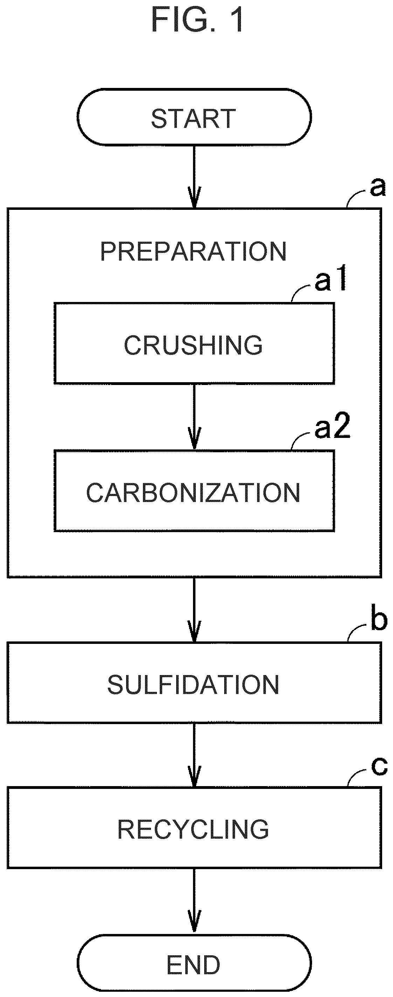

FIG. 1 is a schematic flowchart illustrating a method of producing a recycled material in this embodiment. In the following, "the method of producing a recycled material in this embodiment" may be simply referred to as "this method". This method includes "(a) Preparation " and "(b) Sulfidation". In this method, CS₂ is produced. CS₂ is a recycled material. This method may further include "(c) Recycling" or the like. In the "(c) Recycling", for example, another recycled material may be produced with the use of CSz as a raw material.

### (a) Preparation

This method includes preparing a battery material. The battery material is freely selectable as long as the battery material is a material including carbon. The battery material may include, for example, at least one type selected from the group consisting of a positive electrode plate, a negative electrode plate, a bipolar electrode plate, a positive electrode mixed material, a negative electrode mixed material, a black mass, and a sludge. The battery material may be prepared by any method. For example, various battery materials may be collected by dismantling a used battery, a defective battery, or the like. For example, a battery material including no carbon and a battery material including carbon may be separated. Other recycling processes may be applied to the battery material including no carbon. For example, the black mass, the sludge, and the like may be formed by subjecting the used battery, the defective battery, or the like to various types of processing such as roasting.

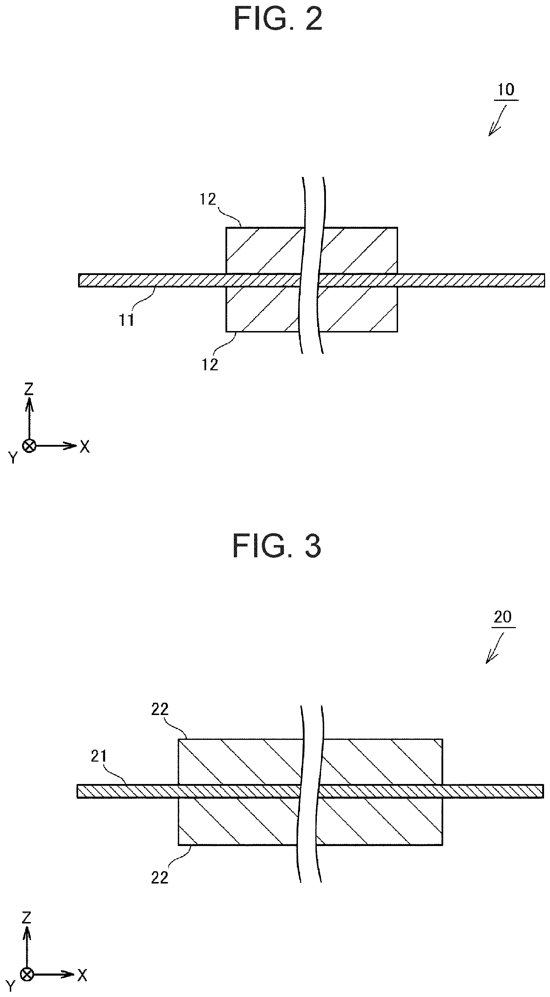

FIG. 2 is a schematic sectional view illustrating an example of a positive electrode plate in this embodiment. A positive electrode plate 10 includes a positive electrode current collector foil 11 and a positive electrode mixed material 12. The positive electrode current collector foil 11 may include, for example, aluminum or the like. The positive electrode mixed material 12 adheres to the positive electrode current collector foil 11. The positive electrode mixed material 12 includes, for example, a positive electrode active material, an electrically conductive material, a binder, and the like. The positive electrode active material may include, for example, a lithium nickel composite oxide, an olivine-type phosphate compound, or the like. The electrically conductive material may include, for example, graphite, carbon black, carbon fibers, carbon nanotubes, graphene flakes, or the like. The binder may include, for example, polyvinylidene fluoride or the like.

FIG. 3 is a schematic sectional view illustrating an example of a negative electrode plate in this embodiment. A negative electrode plate 20 includes a negative electrode current collector foil 21 and a negative electrode mixed material 22. The negative electrode current collector foil 21 may include, for example, copper or the like. The negative electrode mixed material 22 adheres to the negative electrode current collector foil 21. The negative electrode mixed material 22 includes, for example, a negative electrode active material, an electrically conductive material, a binder, and the like. The negative electrode active material may include, for example, graphite, soft carbon, hard carbon, silicon, silicon oxide, a silicon-carbon composite material (an Si/C material), a lithium titanium composite oxide, or the like. The electrically conductive material is similar to that of the positive electrode mixed material 12. The binder may include, for example, carboxymethylcellulose, styrene-butadiene rubber, or the like.

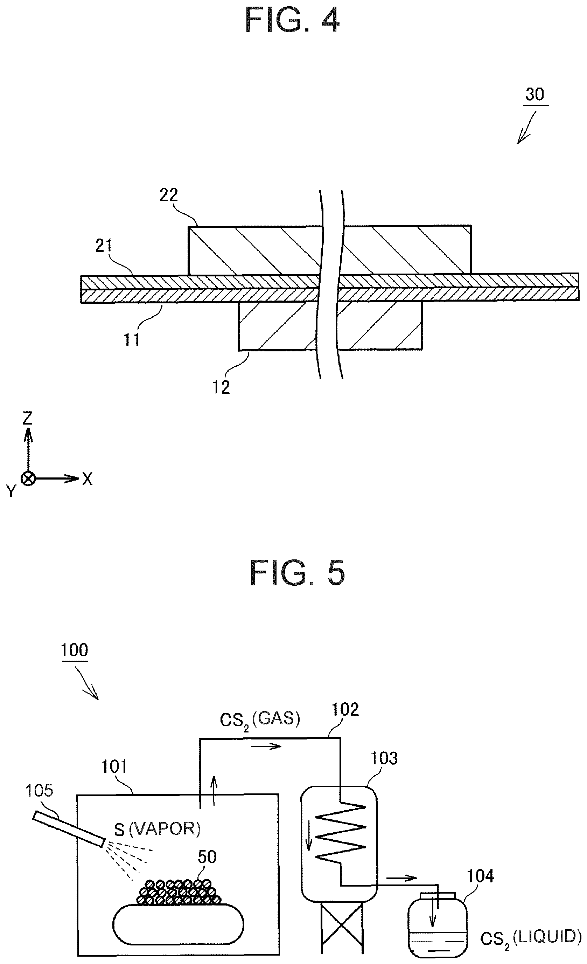

FIG. 4 is a schematic sectional view illustrating an example of a bipolar electrode plate in this embodiment. A bipolar electrode plate 30 includes a positive electrode mixed material 12, a positive electrode current collector foil 11, a negative electrode current collector foil 21, and a negative electrode mixed material 22. For example, an adhesive (not shown) may couple the positive electrode current collector foil 11 and the negative electrode current collector foil 21 to each other. The positive electrode mixed material 12 and the negative electrode mixed material 22 have a front-rear relationship. Normally, the recycling process of the bipolar electrode plate 30 begins from separation between the positive electrode mixed material 12 and the negative electrode mixed material 22. At the time of separation, contamination from the negative electrode mixed material 22 to the positive electrode mixed material 12 may occur. Accordingly, for example, when a carbon-based negative electrode active material (such as graphite) is used, the discarding amount of carbon tends to be large. This method is particularly effective for the bipolar electrode plate 30.

In the positive electrode plate 10, the negative electrode plate 20, and the bipolar electrode plate 30, the recovery target of carbon is mainly the electrically conductive material (such as carbon black), the binder (an organic polymer), or the carbon-based negative electrode active material (such as graphite, soft carbon, hard carbon, or an Si/C material). For example, in some cases, the electrically conductive material (such as carbon black) is applied to the surface of the positive electrode current collector foil 11. The electrically conductive material applied to the positive electrode current collector foil 11 may become the recovery target of carbon.

### (a1) Crushing

This method may include, for example, forming a granular material by crushing the battery material. The battery material may be crushed by any crushing apparatus. With the battery material being crushed, for example, an improvement in handleability or the like can be expected. Moreover, in "(b) Sulfidation" described later, an improvement in contact efficiency between carbon and sulfur can be expected. For example, after the positive electrode mixed material 12 is peeled off from the positive electrode current collector foil 11, the positive electrode mixed material 12 may be crushed. For example, the positive electrode plate 10 may be crushed as it is.

### (a2) Carbonization

This method may include carbonizing an organic matter included in the battery material by heating the battery material. For example, the crushed granular material may be heated. Any heating apparatus may be used. For example, the battery material may be heated at a temperature of 300°C or more. With the heating, carbonization of the organic matter (for example, the binder or the like) can be expected. With the organic matter being carbonized in advance, in "(b) Sulfidation" described later, an improvement in yield of CS₂ can be expected. The carbonization temperature (heating temperature) may be, for example, 450°C or more or 600°C or more. The carbonization temperature may be, for example, 900°C or less, 750°C or less, or 600°C or less. The carbonization atmosphere may be, for example, an air atmosphere, a hypoxic atmosphere, an oxygen-free atmosphere, or the like.

### (b) Sulfidation

This method includes generating CS₂ by causing carbon (C) included in the battery material and sulfur (S) to react with each other. FIG. 5 is a concept view illustrating an example of a production apparatus in this embodiment. A production apparatus 100 may include, for example, a heating furnace 101, a collection pipe 102, a cooling column 103, a collection container 104, a gas introduction tube 105, and the like. For example, a workpiece 50 is disposed in the heating furnace 101. The workpiece 50 may be, for example, a mixture of the battery material and sulfur powder (a solid). The workpiece 50 is heated in the heating furnace 101. For example, the temperature is raised up to 850°C to 950°C. In the process of raising the temperature, the sulfur powder may exceed the boiling point of sulfur (444.6°C), and thus sulfur vapor may be generated. The sulfur vapor may penetrate into the battery material, and thus sulfur and carbon may be in contact. That is, this method includes bringing sulfur vapor into contact with the battery material. When the battery material is a granular material (a crushed material), it is considered that penetration of sulfur vapor smoothly proceeds. In a temperature range of 850°C to 950°C, a reaction of "C + 2S → CS₂" may proceed, and thus CS₂ may be generated. The inside of the heating furnace 101 is an environment exceeding the boiling point of CS₂ (46.5°C), and hence CS₂ may be generated in a gas state.

The production apparatus 100 may further include, for example, a stirring apparatus (not shown) or the like. For example, in the heating furnace 101, the workpiece 50 may be stirred. With the workpiece 50 being stirred, an improvement in contact efficiency between sulfur and carbon can be expected.

The generated CS₂ (gas) may pass through the collection pipe 102 to reach the cooling column 103. In the cooling column 103, CS₂ may be cooled to be equal to or lower than the boiling point, and thus CS₂ may be liquefied. CS₂ (liquid) may be collected to the collection container 104.

For example, sulfur vapor may be used in place of sulfur powder (solid). For example, the sulfur vapor may be blown to the workpiece 50 being heated. For example, the sulfur vapor may be supplied into the heating furnace 101 through the gas introduction tube 105.

For example, the positive electrode plate 10, the negative electrode plate 20, the bipolar electrode plate 30, or the like may be regarded as the workpiece 50. For example, in the heating furnace 101, the sulfur vapor may be blown to the positive electrode plate 10 (an integrated material of the positive electrode mixed material 12 and the positive electrode current collector foil 11). With this aspect, CS₂ is generated, and also the adhesive force of the positive electrode mixed material 12 is lost, resulting in that the positive electrode mixed material 12 may be separated from the positive electrode current collector foil 11.

The residue obtained after the processing is a battery material whose carbon has been reduced. The residue may be subjected to other recycling processes (for example, extraction of metal or the like).

### (c) Recycling

CS₂ is a recycled material. With the use of CS₂ as a raw material, various materials may be produced. For example, with the use of CS₂ as a raw material, viscose rayon, cellophane, carbon tetrachloride, and the like may be produced.

CS₂ may be used as a solvent. For example, CS₂ may be used as a solvent of phosphorus, sulfur, selenium, bromine, iodine, lipid, resin, rubber, or the like.

For example, with the use of CS₂ as a raw material, lithium sulfide (Li₂S) may be produced. Lithium sulfide may be a raw material of sulfide solid electrolyte (for example, Li₂S-P₂S₅ or the like). The sulfide solid electrolyte is a key material of an all-solid-state battery. For example, with the reaction of "4LiH + CS₂ → 2Li₂S + C + 2H₂", the lithium sulfide may be synthesized. Alternatively, with the reaction of "4Li + CS₂ → 2Li₂S + C", the lithium sulfide may be synthesized.

For example, with the use of CS₂ as a raw material, carbonyl sulfide (COS) may be produced. Carbonyl sulfide may be used as, for example, an etching gas in a semiconductor manufacturing process. For example, with the reaction of "CO₂ + CS₂ → 2COS", the carbonyl sulfide may be synthesized. As expressed in the reaction formula, carbon dioxide may be consumed in the generation process of carbonyl sulfide, and thus carbon neutrality can be achieved.

Moreover, for example, with a catalytic cracking reaction of carbonyl sulfide of "COS → CO + S", carbon monoxide may be produced. Carbon monoxide may be used as various fuels and a raw material for chemical industry. Moreover, sulfur generated together with carbon monoxide may be used again for recovery of carbon.

## Claims

1. A method of producing a recycled material, the method comprising:
(a) preparing a battery material; and
(b) generating carbon disulfide by causing carbon included in the battery material and sulfur to react with each other.

2. The method according to claim 1, wherein the battery material includes at least one type selected from the group consisting of a positive electrode plate, a negative electrode plate, a bipolar electrode plate, a positive electrode mixed material, a negative electrode mixed material, a black mass, and a sludge.

3. The method according to claim 1, wherein the (a) includes (a1) forming a granular material by crushing the battery material.

4. The method according to claim 1, wherein the (a) includes (a2) carbonizing an organic matter included in the battery material by heating the battery material.

5. The method according to any one of claims 1 to 4, wherein the (b) includes bringing sulfur vapor into contact with the battery material.
